(19) Europäisches Patentamt
European Patent Office
Office européen des brevets

(11) **EP 4 345 074 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **23197625.9**

(22) Anmeldetag: **15.09.2023**

(51) Internationale Patentklassifikation (IPC):
*C03C 1/00* (2006.01)   *C03B 19/06* (2006.01)
*C03C 3/04* (2006.01)   *C03C 3/06* (2006.01)
*C03C 11/00* (2006.01)   *F27D 5/00* (2006.01)

(52) Gemeinsame Patentklassifikation (CPC):
**C03C 1/006; C03B 19/09; C03C 3/04; C03C 3/06; C03C 11/00;** C03B 19/06

(54) **BRENNHILFSMITTEL AUS EINEM VERBUNDMATERIAL, VERBUNDMATERIAL UND VERFAHREN ZU DESSEN HERSTELLUNG SOWIE DESSEN VERWENDUNG**

KILN FURNITURE MADE OF A COMPOSITE MATERIAL, COMPOSITE MATERIAL AND METHOD FOR THE PRODUCTION THEREOF AND USE THEREOF

ASSESSOIRES DE CUISSON EN MATÉRIAU COMPOSITE, MATÉRIAU COMPOSITE ET SON PROCÉDÉ DE FABRICATION ET D'UTILISATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **30.09.2022 DE 102022125253**

(43) Veröffentlichungstag der Anmeldung:
**03.04.2024 Patentblatt 2024/14**

(73) Patentinhaber: **SCHOTT AG**
**55122 Mainz (DE)**

(72) Erfinder:
• **BORENS, Manfred-Josef**
**55122 Mainz (DE)**
• **DRUSCHKE, Frank Jürgen**
**55122 Mainz (DE)**
• **FRANKE, Peter**
**55122 Mainz (DE)**
• **BUG, Michael**
**55122 Mainz (DE)**
• **KUNERT, Christian**
**55122 Mainz (DE)**
• **WASEM, Gerald**
**55122 Mainz (DE)**
• **KEHL, Joachim Dietrich**
**55122 Mainz (DE)**

(74) Vertreter: **Schott Corporate IP**
**Hattenbergstraße 10**
**55122 Mainz (DE)**

(56) Entgegenhaltungen:
DE-A1- 10 359 491    DE-A1- 2 605 948

## Beschreibung

Gebiet der Erfindung

Im Allgemeinen betrifft die Erfindung ein Verbundmaterial, welches besonders zur Verwendung als Brennhilfsmittel in formgebenden Hochtemperaturprozessen geeignet ist. Insbesondere betrifft die Erfindung ein gesintertes Verbundmaterial mit hoher Formstabilität und Formtreue.

Stand der Technik

Für eine Vielzahl von Nachverarbeitungsprozessen von bspw. Gläsern oder auch Glaskeramiken werden sowohl für den Transport als auch die Durchführung der entsprechenden Prozesse formgebende und/oder stützende Unterlagen benötigt, also sozusagen als Brennhilfsmittel eingesetzt. Hierbei sind die hier verwendeten Materialien teils harschen Prozessbedingungen ausgesetzt. So werden beispielsweise die Materialien bei der Keramisierung von Grünglasartikeln zu Glaskeramikartikeln über relativ lange Zeitintervalle von mehreren Stunden bis zu mehreren Tagen hohen Temperaturen ausgesetzt. Durch die wiederholte Verwendung der Brennhilfsmittel, abhängig vom jeweiligen Brennhilfsmittel und Prozess bis zu mehreren hundert Einsätzen, stellt dies hohe Anforderungen an das Brennhilfsmittel. Dies gilt auch für Formgebungsprozesse, bei denen beispielsweise Grüngläser gebogen und keramisiert werden. Auch in Fertigungs- und Verarbeitungsprozessen von Keramiken oder Fusingprozessen zur Fertigung von Glasartikeln besteht ein Bedarf an entsprechenden Brennhilfsmitteln.

Derzeit werden hierzu als Brennhilfsmittel meist schlickergegossene $SiO_2$-Materialien bzw. Quarzgut und daraus hergestellte Komponenten verwendet. Durch Dauerbeanspruchen der Brennhilfsmittel, insbesondere bei Prozesstemperaturen oberhalb von 750°C, sowie auch insbesondere durch die teilweise kurzen thermischen Zyklen beim Aufheizen und/oder Temperaturveränderungen während der Prozessführung, inklusive des Abkühlens, zeigen entsprechende Materialien jedoch mit zunehmender Einsatzdauer Abweichung bezüglich ihrer Form. Hierdurch ist die Maßhaltigkeit einer entsprechenden Form nicht gewährleistet, was sich beispielsweise nachteilig auf die Qualität der mit Hilfe der Brennhilfsmittel hergestellten bzw. verarbeiteten Glas- oder Glaskeramikprodukte auswirkt. Zudem kann sich auch die Kontaktfläche des Brennhilfsmittels mit den Glas- oder Glaskeramikprodukten verändern. Dies kann beispielsweise Unebenheiten oder Oberflächendefekte der Glas- oder Glaskeramikprodukte verursachen und sich so ebenfalls nachteilig auf die Produktqualität auswirken.

Ursache dieser nachteiligen Veränderungen sind zum einen Nachsinterprozesse sowie Veränderungen in der Materialstruktur der eingesetzten Materialien der Brennhilfsmittel, insbesondere durch die zuvor beschriebenen thermischen Lasten. So können durch die hohen Temperaturen die Quarzglasphasen zumindest teilweise in kristalline Strukturen umgewandelt werden. Hierbei ist insbesondere die Bildung von Cristobalit relevant. Oberhalb von 1200°C wandelt sich das Quarzglas in Cristobalit um, was mit einer Zunahme des Volumens einhergeht. Durch die Volumenänderung im Material kann es zu einer Verformung des Brennhilfsmittels kommen, die sich wiederum auf die Maßhaltigkeit des Glas- oder Glaskeramikproduktes auswirkt. Ein weiterer Nachteil der Cristobalitbildung liegt darin, dass unterhalb von 200°C wiederum eine Umwandlung der Cristobalitphasen unter Volumenzunahme stattfindet, was zu Rissbildung, Abplatzungen und entsprechend Kontamination von Öfen, den Brennhilfsmitteln selbst, wie auch den Produkten oder gar dem Versagen der Brennhilfsmittel führen kann.

Die DE 103 59 491 A1 beschreibt ein derartiges, zusätzlich faserverstärktes Material. Die Verwendung von Brennhilfsmitteln aus im Wesentlichen rein quarzbasierten $SiO_2$-Materialien kann hierbei insbesondere bei Prozessen mit Temperaturen oberhalb von 1000°C problematisch sein. So neigen diese bei Dauerbelastungen im Hochtemperaturbereich von mehr als 750°C zu Strukturveränderungen. Diese Veränderungen sind Folge von Nachsinterprozessen und Umwandlungen der Materialstrukturen, beispielsweise durch Umwandlungen von glasigen Phasen in kristalline Strukturen, Umwandlungen kristalliner Phasen, oder Verringerung der Restporosität. Diese Veränderungen können mit Volumenänderungen einhergehen und somit zu Formveränderungen führen, so dass die Maßhaltigkeit während der Betriebsdauer nicht gewährleistet ist. Zudem kann es auch zu einer Veränderung der Kontaktfläche zu den Glasprodukten kommen. Dies kann zu Qualitätseinbußen in der Glasproduktion bzw. Keramisierung (d.h. bei der Umwandlung von Glas in Glaskeramik) führen.

Um diese Nachteile zu vermeiden, werden im Stand der Technik Brennhilfsmittel aus beispielsweise Siliciumcarbid (SiC) beschrieben, welche weniger anfällig gegenüber den oben beschriebenen Veränderungen sind. Nachteilig ist jedoch, dass entsprechende Bauteile sehr kostenintensiv sind und in der benötigten Form und Größe, je nach Anwendung ein bis einige m$^2$, häufig nicht verfügbar sind. Außerdem ist die meist abrasive Bearbeitung (bspw. Schleifen) zur Herstellung von 3-dimensionalen Formen und Unterlagen insbesondere bei sehr hohen Maßanforderungen und engen Toleranzen nur sehr schwer, aufwendig und kostenintensiv möglich.

Aufgabe der Erfindung

Es ist daher eine Aufgabe der Erfindung, ein Material bereitzustellen, welches gegenüber hohen Temperaturen, insbesondere gegenüber Temperaturen von mehr als 750°C, struktur- und formstabil ist und sich zur Herstellung von entsprechenden Brennhilfsmitteln eignet. Die Bereitstellung eines Brennhilfsmittels mit den oben beschriebenen Anforderungen sowie die Bereitstellung einer entsprechenden Zubereitung und eines Herstellungsverfahrens zur Herstellung des Materials bzw. des Brennhilfsmittels sind weitere Aufgaben der Erfindung.

Beschreibung der Erfindung

Die Aufgabe der Erfindung wird bereits durch den Gegenstand der unabhängigen Ansprüche gelöst. Vorteilhafte Ausgestaltungen und Weiterbildungen sind Gegenstand der Unteransprüche.

Gemäß eines Aspektes der Erfindung wird eine Zubereitung bereitgestellt, die insbesondere für die Herstellung von Platten und Formkörpern geeignet und gießfähig ist.

Die Zubereitung umfasst einen Basisschlicker, Quarzglaspartikel und Partikel eines Zuschlagstoffes, der insbesondere kristallisierbares oder zumindest teilweise kristallisiertes Multikomponentenglas bzw. Grünglas oder Glaskeramik umfasst.

Der Basisschlicker umfasst Wasser als Dispergiermedium mit einem Anteil zwischen 30 und 50 Gew.-%, bevorzugt 35 und 45 Gew.-% meist bevorzugt 38 und 42 Gew.-% und darin verteilt $SiO_2$-Feinstpartikel bzw. $SiO_2$-Feinstkorn mit einem Anteil zwischen 50 und 70 Gew.-%, bevorzugt 55 und 65 Gew.-%, meist bevorzugt 58 und 62 Gew.-%. Die $SiO_2$-Feinstpartikel sind im Dispergiermedium kolloidal verteilt und werden im Folgenden auch als kolloidales $SiO_2$ bezeichnet. Dabei weisen die $SiO_2$-Feinstpartikel eine Korngrößenverteilung $D_{50}$ im Bereich von 1 bis 3 $\mu$m, bevorzugt 1 bis 2 $\mu$m und/oder eine Korngrößenverteilung $D_{90}$ kleiner als 5 $\mu$m, bevorzugt kleiner als 4 $\mu$m auf.

Die Zubereitung enthält den Basisschlicker mit einem Anteil zwischen 15 und 45 Gew.-%, bevorzugt 20 und 40 Gew.-%, meist bevorzugt 20 und 35 Gew.-%, Quarzglaspartikel mit einem Anteil zwischen 40 und 70 Gew.-%, bevorzugt 50 und 60 Gew.-%, Partikel des Zuschlagstoffes umfassend zumindest ein Grünglas oder eine Glaskeramik mit einem Anteil zwischen 0,5 und 37 Gew%, beispielsweise zwischen 5 und 37 Gew.-%, bevorzugt 7 und 25 Gew.-%, meist bevorzugt 9 und 21 Gew.-%. Ein besonders geeigneter Anteil des Grünglases oder der Glaskeramik liegt im Bereich von 0,5 bis 20 Gew-%, mehr bevorzugt 1 bis 20 Gew-%, noch weiter bevorzugt 1 bis 10 Gew-% oder 0,5 bis 5 Gew.-%. Überraschend haben bereits diese geringen Anteile von Grünglas, beziehungsweise der Glaskeramik im Verbundwerkstoff einen deutlichen und ausreichenden Effekt hinsichtlich der Struktur- und Formstabilität.

Gemäß einer Ausführungsform beträgt der Anteil des Wassers in der Zubereitung 6 bis 18 Gew.-%. Entsprechende Wassergehalte ermöglichen eine gute Fließ- bzw. Gießfähigkeit der Zubereitung bei einem möglichst hohen Feststoffanteil.

Eine Ausführungsform sieht vor, dass die Zusammensetzung der Zubereitung 7,5 bis 32 Gew.-%, bevorzugt 11 bis 26 Gew.-% $SiO_2$-Feinstpartikel, Quarzglaspartikel mit einem Anteil zwischen 40 und 70 Gew.-%, bevorzugt 50 und 60 Gew.-% und Partikel des Zuschlagstoffes umfassen zumindest ein Grünglas oder eine Glaskeramik mit einem Anteil zwischen 0,5 und 37 Gew%, vorzugsweise zwischen 0,5 und 20 Gew%, insbesondere zwischen 1 bis 20 Gew.-%, besonders bevorzugt 1 bis 10 Gew%, insbesondere 0,5 und 5 Gew%, oder zwischen 5 und 37 Gew.-%, bevorzugt 7 und 25 Gew.-%, meist bevorzugt 9 und 21 Gew.-% und einen Anteil an Wasser im Bereich von 6 bis 18 Gew.-% enthält.

Gemäß einer vorteilhaften Ausgestaltung der Erfindung weisen die Quarzglaspartikel eine Partikelgrößenverteilung auf, wobei die Quarzglaspartikel eine Korngrößenverteilung $D_{50}$ im Bereich von 30 $\mu$m bis 500 $\mu$m, bevorzugt im Bereich von 63 $\mu$m bis 250 $\mu$m und/oder eine Korngrößenverteilung $D_{99}$ kleiner als 3,0 mm, bevorzugt kleiner als 2,0 mm und besonders bevorzugt kleiner als 1,0 mm haben.

Als Zuschlagstoff werden der Zubereitung kristallisierbare Glaspartikel- oder zumindest teilweise kristallisierte Glaspartikel aus einem Mehrkomponentenglas zugegeben. Unter einem Mehrkomponentenglas wird im Sinne der Erfindung ein Glas verstanden, das neben $SiO_2$ zumindest einen weiteren, glasbildenden Bestandteil aufweist. Durch die Zugabe von Partikeln von kristallisierbarem Glas, auch als Grünglas bezeichnet, oder zumindest teilweise kristallisiertem Glas, auch als Glaskeramik bezeichnet, erfolgt eine Stabilisierung einer mit der Zubereitung hergestellten Platte oder eines entsprechenden Formkörpers auch bei hohen Temperaturen.

Ein kristallisierbares Glas im Sinne dieser Offenbarung ist insbesondere ein Glas, welches durch Temperaturbehandlung im Bereich unterhalb, bevorzugt mindestens 100K unterhalb, der Transformationstemperatur des Matrixglases nach max. 24 Std. zu über 75% in kristalline Phasen umgewandelt werden kann. Im vorliegenden Fall einer Kieselglas-Matrix beträgt die Transformationstemperatur des Matrixglases und somit die Obergrenze für die Temperaturbehandlung 1130°C. Übliche Borosilicatgläser, wie insbesondere "Borosilicatglas 3.3 gemäß DIN/ISO 3585", z.B. die unter den Markennamen DURAN oder PYREX vertriebenen Gläser, erfüllen diese Bedingung nicht.

Eine Ausführungsform sieht vor, dass die Partikel aus Mehrkomponentenglas eine Partikelgrößenverteilung mit einer mittleren Korngröße $D_{50}$ im Bereich von 10 $\mu$m bis 100 $\mu$m, vorzugsweise mit einer mittleren Korngröße $D_{50}$ im Bereich von 15 bis 40 $\mu$m aufweisen. Entsprechende Korngrößenverteilungen gewährleisten eine gute Verarbeitbarkeit, insbesondere eine gute Gießfähigkeit und Homogenisierbarkeit, der Zubereitung. Gleichzeitig weisen die somit im Formkörper gebildeten Glaskeramikphasen eine ausreichend große Größe auf, um einen stabilisierenden Effekt auf das Quarzglasgerüst auszuüben.

Die Zubereitung enthält $SiO_2$-Feinstpartikel und Wasser als Dispergiermedium. Die $SiO_2$-Feinstpartikel sind im Dispergiermedium kolloidal verteilt und werden im Folgenden auch als kolloidales $SiO_2$ bezeichnet. Gemäß einer Ausführungsform beträgt der Anteil an Wasser in der Zubereitung 6 bis 20 Gew%, vorzugsweise 10 bis 20 Gew.-%. Entsprechende Wassergehalte ermöglichen eine gute Fließ- bzw. Gießfähigkeit der Zubereitung bei einem möglichst hohen Feststoffanteil.

Dabei weisen die $SiO_2$-Feinstpartikel eine Korngrößenverteilung $D_{50}$ im Bereich von 1 bis 3 $\mu$m und/oder eine Korngrößenverteilung $D_{90}$ kleiner als 5 $\mu$m, bevorzugt kleiner als 4 $\mu$m auf.

Dem Basisschlicker werden Quarzglaspartikel sowie als Zuschlagsstoff Partikel aus einem kristallisierbaren oder zumindest teilweise kristallisiertem Mehrkomponentenglas, zugegeben. Der Anteil an Quarzglaspartikeln und Zuschlagstoff in der Zugabe zum Basisschlicker beträgt gemäß einer Ausführungsform 70 bis 99,5 Gew.-%, bevorzugt 80 bis 99 Gew.-%, besonders bevorzugt 90 bis 99 Gew.-%.

Gemäß einer vorteilhaften Ausgestaltung der Erfindung weisen die Quarzglaspartikel eine Partikelgrößenverteilung auf, wobei die Quarzglaspartikel eine Korngrößenverteilung $D_{50}$ im Bereich von 30 $\mu$m bis 500 $\mu$m, bevorzugt im Bereich von 63$\mu$m bis 250 $\mu$m und/oder eine Korngrößenverteilung $D_{99}$ kleiner als 3,0 mm, bevorzugt kleiner als 2,0 mm und besonders bevorzugt kleiner als 1,0 mm haben.

Als Zuschlagstoff werden der Zubereitung kristallisierbare Glaspartikel- oder zumindest teilweise kristallisierte Glaspartikel aus einem Mehrkomponentenglas zugegeben. Unter einem Mehrkomponentenglas wird im Sinne der Erfindung ein Glas verstanden, das neben $SiO_2$ zumindest einen weiteren, glasbildenden Bestandteil aufweist. Der Anteil kristallisierbaren oder kristallisierten Glaspartikeln an der Zubereitung beträgt gemäß einer Ausführungsform 0,5 und 37 Gew%, vorzugsweise 0,5 bis 20 Gew%, insbesondere 0,5 bis 5 Gew%, oder auch 5 bis 37 Gew.-%, bevorzugt 7 und 25 Gew.-%, meist bevorzugt 9 und 21 Gew.-%. Durch die Zugabe von Partikeln aus kristallisierbarem Glas, auch als Grünglas bezeichnet, oder zumindest teilweise kristallisiertem Glas, auch als Glaskeramik bezeichnet, erfolgt eine Stabilisierung einer mit der Zubereitung hergestellten Platte oder eines entsprechenden Formkörpers auch bei hohen Temperaturen.

Eine Ausführungsform sieht vor, dass die in der Zubereitung enthaltenen Partikel des Mehrkomponentenglases zumindest teilweise kristallisiert sind. Die zumindest teilweise kristallisierten Glaspartikel weisen eine hohe Temperaturstabilität auf und führen somit auch zu einer Stabilisierung des Quarzglasgerüstes, wobei dieses Gerüst beziehungsweise diese Matrix neben Quarzglas auch kristalline Anteile umfassen kann, in einem mit der Zubereitung hergestellten Formkörpers. Anders als keramische Zuschlagstoffe enthalten die teilweise kristallisierten Glaspartikel aus Mehrkomponentenglas, im Folgenden auch als Glaskeramikpartikel bezeichnet, glasige Restphasen. Durch diese glasigen Restphasen wird eine Anbindung der teilweise kristallisierten Glaspartikel an die Quarzmatrix ermöglicht, was sich vorteilhaft auf die Stabilität eines entsprechenden Formkörpers auswirkt.

Gemäß einer weiteren, bevorzugten Ausführungsform enthält die Zubereitung alternativ oder zusätzlich zu den kristallisierten Glaspartikeln Partikel aus kristallisierbarem Glas bzw. Grünglas. Diese werden bei der Herstellung eines Formkörpers *in situ* in Glaskeramikpartikel überführt und führen ebenso zu einer Stabilisierung des Quarzgerüstes. Vorteilhaft ist hierbei, dass die Glaspartikel zunächst durch den glasigen Charakter der Partikel besonders gut in das Quarzgerüst eingebunden werden können und nachfolgend eine Umwandlung der Glaspartikel in Glaskeramikpartikel erfolgt. Jedoch stellt die *in situ* erfolgende Umwandlung in eine Glaskeramik während der Herstellung eines Formkörpers aus der Zubereitung einen aufwändigeren Herstellungsprozess, insbesondere in Hinblick auf die Temperaturführung, dar als die Herstellung eines Formkörpers aus einer Zubereitung mit bereits teilweise kristallisierten Glaspartikeln.

In weiteren Ausführungsformen ist vorgesehen, dass kristallisierbare und/oder zumindest teilweise kristallisierte Glaspartikel eingesetzt werden, die bevorzugt die gleiche oder ähnliche Zusammensetzung aufweisen und/oder solches kristallisierbares Glas aus dem sich zumindest teilweise ähnliche oder gleiche Kristallphasen bilden, wie diese auch in den jeweils eingesetzten kristallisierten Glaspartikeln vorliegen, eingesetzt werden. Allerdings können sich die der Zubereitung zugegebenen, kristallisierten Glaspartikel und die aus dem der Zubereitung zugegebenen, kristallisierbaren Glaspartikel erhaltenen, zumindest teilweise kristallisierten Glaspartikel auch voneinander unterscheiden, also insb. auch unterschiedliche Zusammensetzungen aufweisen. Dies erfolgt bspw. um thermomechanische (z.B. thermische Dehnung, Wärmeleitfähigkeit oder -kapazität oder Steifigkeit (E-Modul), oder chemische Eigenschaften des Verbundmaterials, also dem aus der zubereiteten Gießmasse hergestellten Formkörper, anzupassen.

Zubereitungen mit einer besonders guten Verarbeitbarkeit, insbesondere einer hohen Fließfähigkeit bei einem möglichst hohen Feststoffgehalt, können erhalten werden, wenn die Korngrößenverteilung der Quarzglaspartikel und/oder der Partikel des Mehrkomponentenglases multimodal ist. Gemäß einer Ausführungsform weisen, Quarzglaspartikel, kristallisierbare Glaspartikel und/oder kristallisierte Glaspartikel eine bimodale oder sogar trimodale Partikelgrößenverteilung auf. Eine Ausführungsform sieht vor, dass die $SiO_2$-Feinstpartikel eine monomodale Partikelgrößenverteilung aufweisen.

Eine Weiterbildung sieht vor, dass die Andreassen-Gleichung der Größenverteilung der Gesamtheit der Partikel der Zubereitung einen q-Wert im Bereich von 0,1 bis 0,3 aufweist. Gemäß einer Ausführungsform ist der q-Wert < 0,3 oder < 0,25. Das Andreassen-Modell beschreibt die Möglichkeit, einen Raum möglichst dicht mit kugelförmigen Partikeln füllen zu können, so dass der verbleibende Hohlraum möglichst klein wird aber dennoch die Mischung fließfähig ist. Durch die Verwendung von Partikeln mit einer breiten Partikelgrößenverteilung kann unter dieser Bedingung ein Volumen mit einem deutlich höheren Füllgrad, d.h. mit mehr Partikeln pro Volumen gefüllt werden, als bei der Verwendung von Partikeln mit einer engen Partikelverteilung oder sogar monodispersen Partikeln. So können sich bei Partikeln mit einer breiten Partikelverteilung die kleineren Partikel in die Hohlräume, die zwischen den größeren Partikeln gebildet werden, legen und so den Raum besser ausnutzen. Das Andreassen-Modell gibt hier eine idealisierte Partikelgrößenverteilung vor, mit welcher der maximale Füllgrad eines Raums mit kugelförmigen Partikeln bei gleichzeitiger Fließfähigkeit der Mischung erreicht werden kann:

$$Q_3(d) = \left(\frac{d}{D}\right)^q$$

d    Partikelgröße
D    maximale Partikelgröße
q    Verteilungskoeffizient

Die Partikelgröße "d" wird dabei wie folgt bestimmt: die einzelnen Partikel eines Pulvers werden unabhängig von ihrer realen Form anhand des Durchmessers einer Kugel mit ihrem Äquivalentvolumen (volume-equivalent sphere diameter) in verschiedene Fraktionen eingeteilt. Zur Ermittlung der Partikelverteilung Q wird die jeweilige Anzahl der entsprechenden Fraktionen innerhalb des Pulvers bestimmt. In der Andreassen-Gleichung wird die Partikelverteilung $Q_3(d)$ verwendet, welche sich aus dem Volumen der jeweiligen Fraktionen berechnet.

Der q-Wert gibt die Steigung des Andreassen-Gleichung in einer doppellogarithmischen Auftragung wieder. Durch die Variation des q-Werts werden die Abweichungen der realen Partikel von den idealen Modellpartikeln berücksichtigt. Diese Abweichungen können beispielsweise durch eine von einer idealen Kugel abweichende Form der Partikel oder Wechselwirkungen der Partikel untereinander oder mit dem Dispergiermedium auftreten.

Partikel, die aufgrund der Wechselwirkung mit der Dispersenphase zu Agglomeration neigen, zeigen schlechtere rheologische Eigenschaften bei kleinen q-Werten, sprich bei breiten Partikelgrößenverteilungen die einen hohen Füllgrad aufweisen würden. Weshalb ein höherer q-Wert hier vorteilhaft sein kann. Mit einem steigenden q-Wert jedoch wird das Gemisch grobkörniger und schwerer verarbeitbar. Gemische mit hohem Feingehalt weisen dagegen einen niedrigen q-Wert auf.

Die Erfinder haben überraschend festgestellt, dass durch die Wahl des q-Werten höhere Füllgrade in der Zubereitung der Gießmasse erzielt werden können. Die Andreassen-Gleichung der Glaspartikelgrößenverteilung weist einen q-Wert im Bereich von 0,1 bis 0,3 auf. Besonders hohe maximale Volumenfüllgrade werden in Schlickern erzielt, deren Andreassen-Gleichung einen q-Wert im Bereich von 0,1 bis 0,25 aufweist.

Für den Zuschlag eignen sich Pulver aus sämtlichen kristallisierbaren Glassystemen, insbesondere auf Silicatbasis, wie bspw. $MgO\text{-}Al_2O_3\text{-}nSiO_2$ (MAS), $ZnO\text{-}Al_2O_3\text{-}nSiO_2$ (ZAS) oder $Li_2O\text{-}Al_2O_3\text{-}nSiO_2$ (LAS). Hierbei ist besonders vorteilhaft, wenn der Zuschlag arteigen, also ähnlich oder gleich zu einem auf oder mit dem Brennhilfsmittel herstellbaren, herzustellenden oder hergestellten Produkt ist. Soll also bspw. ein Grünglas einer Glaskeramik des LAS-Typs thermisch nachbehandelt, insb. keramisiert werden, so kommt als Zuschlag als Grünglas oder als Glaskeramikpartikel bevorzugt auch ein zugehöriger LAS-Typ zum Einsatz.

Ein weiterer Aspekt der Erfindung betrifft ein Verfahren zur Herstellung eines Formkörpers. Hierbei wird zunächst die oben beschriebene Zubereitung bereitgestellt. Diese kann beispielsweise durch Zugabe einer Quarzglaskörnung, sowie von Partikeln aus einem kristallisierbaren und/oder zumindest teilweise kristallisiertem Mehrkomponentenglas zu einem Basisschlicker erhalten werden. Die so erhaltende Zubereitung wird in einem nachfolgenden Schritt in eine Form mit porösen Wänden, vorzugsweise in eine Gipsform, gegossen und in dieser getrocknet. Durch die Verwendung einer Form mit porösen Wänden wird hierbei eine adsorptive Aufnahme des in der Zubereitung enthaltenen Wassers durch die Form ermöglicht. In Verbindung mit einem relativ niedrigen Wassergehalt in der Zubereitung können so kurze Trockenzeiten realisiert werden. Zudem führt die Verwendung einer Zubereitung mit einem möglichst niedrigen Wassergehalt zu einer Reduzierung des Schrumpfens während der Trocknung.

Nach der zumindest teilweisen Trocknung wird der Grünkörper aus der Form entnommen und ggf. weiter getrocknet und im Temperaturbereich $T_{Sinter}$ von 1000°C bis 1200°C, vorzugsweise im Bereich von 1030°C bis 1180°C gesintert. Während des Sinterprozesses werden die $SiO_2$-Partikel zusammen mit den in der Zubereitung enthaltenen Grünglas- oder teilweise kristallisierte Glaspartikel gesintert. Bei Ausführungsformen mit Grünglaspartikeln werden diese während des Sinterprozesses bei einer Keramisierungstemperatur $T_{Keramisierung}$ zumindest teilweise kristallisiert und in eine Glaskeramikphase überführt. Die Keramisierungstemperatur $T_{Keramisierung}$ ist abhängig von der jeweiligen Grünglaszusammensetzung, liegt jedoch unterhalb der Sintertemperatur $T_{Sinter}$, so dass gilt $T_{Keramisierung} < T_{Sinter}$. Die Sintertemperatur $T_{Sinter}$ ist kleiner als 1200°C, vorzugsweise höchstens 1030 °C, so dass eine Umwandlung der sich bildenden bzw. gebildeten Quarzglasmatrix in Cristobalit vermieden wird.

Mit dem oben beschriebenen Verfahren wird ein Verbundmaterial mit einer gesinterten Quarzglas-Matrix und darin dispergierten, zumindest teilweise kristallisierten Glaspartikel umfassend ein Mehrkomponentenglas erhalten. Das Verbundmaterial ist dabei formstabil, so dass es mechanisch nachbearbeitet werden kann. Eine Ausführungsform der Erfindung sieht daher einen weiteren Formgebungsprozess nach der Sinterung vor. Hierbei kann es sich insbesondere um Schleif-, Fräs- oder Bohrprozesse handeln.

Die zumindest teilweise kristallisierten Glaspartikel des Verbundmaterials bilden zumindest eine glaskeramische Phase und der Anteil der glaskeramischen Phase am Verbundmaterial beträgt 0,5 bis 30 Vol.-%, bevorzugt 1 bis 20 Vol.-%. Durch die in der Quarzmatrix dispergierten, zumindest teilweise kristallisierten Glaspartikel erfolgt eine Stabilisierung der Quarzmatrix auch bei hohen Temperaturen. So kann das Verbundmaterial gemäß einer Ausführungsform höheren Temperaturen als eine reine Quarzmatrix ausgesetzt werden, ohne dass es zu einer Verformung des Verbundmaterials kommt.

Gemäß einer Ausführungsform weisen die zumindest teilweise kristallisierten Glaspartikel im Verbundmaterial eine Größe $D_{50}$ im Bereich von 10 $\mu$m bis 100 $\mu$m, vorzugsweise im Bereich von 10 $\mu$m bis 40 $\mu$m auf. Durch eine entsprechende Größenverteilung wird zum einen eine homogene Verteilung der zumindest teilweise kristallisierten Glaspartikel in der Quarzglasmatrix ermöglich. Andererseits weisen die zumindest teilweise kristallisierten Glaspartikel durch ihre Größe eine ausreichend große glasige Phase auf, welche gemeinsam mit den Quarzglaspartikeln und dem im Schlicker enthaltenen $SiO_2$ gesintert werden kann. Dies führt zu einer guten Anbindung der zumindest teilweise kristallisierten Glaspartikel in die $SiO_2$-Matrix des Verbundmaterials.

Als glaskeramische Phasen haben sich insbesondere Lithiumaluminiumsilikatglaskeramiken (LAS), Magnesiumaluminiumsilikatglaskeramiken (MAS) und Zinkaluminiumsilikatglaskeramiken (ZAS) herausgestellt. Gemäß einer bevorzugten Ausführungsform der Erfindung weist das Verbundmaterial eine LAS-Glaskeramikphase auf.

Als besonders vorteilhat haben sich Verbundmaterialien herausgestellt, deren glaskeramische Phase zu 20 bis 90 Vol.-% kristallin ist. Dieser Kristallisationsgrad hat sich besonders voreilhaft in Hinblick auf die Einbindung der Glaskeramikphasen in das Verbundmaterial als auch auf die stabilisierende Wirkung der Glaskeramikphase herausgestellt. Der glasige Anteil der Glaskeramikphase kann gemeinsam mit dem Quarzglas versintert werden kann und führt somit zu einer guten Einbindung der Glaskeramikphasen in die Quarz-Matrix.

Ein hoher Kristallisationsgrad wirkt sich vorteilhaft auf die thermische und mechanische Beständigkeit des Verbundmaterials aus. Gemäß einer Ausführungsform weist die glaskeramische Phase daher einen Kristallisationsgrad von zumindest 30 % auf.

Die kristalline Phase der Glaskeramik ist auch gegenüber hohen Temperaturen stabil, so dass insbesondere keine Umwandlungen der kristallinen Phase in andere Modifikationen erfolgen. Als besonders vorteilhaft hat sich hierbei Keatit als kristalline Phase der Glaskeramik herausgestellt.

Die verwendeten Glaskeramiken weisen vorzugsweise einen geringen thermischen Ausdehnungskoeffizienten auf. Somit kann ein Verbundmaterial mit geringen thermischen Ausdehnungskoeffizienten erhalten werden. Dies ist insbesondere bei der Verwendung des Verbundmaterials als Brennhilfsmittel vorteilhaft. Gemäß einer Ausführungsform weist das Verbundmaterial einen thermischen Ausdehnungskoeffizienten $\alpha_{20\text{-}300°C}$ im Bereich von $0,02*10^{-6}$ bis $0,6*10^{-6}$ /K auf.

Das Verbundmaterial kann insbesondere in oberflächennahen Bereichen geringe Mengen Cristobalit enthalten. Jedoch führt dieser Cristobalitanteil weder zu einer Volumenerhöhung, noch erfolgt eine schädliche Phasenumwandlung von Cristobalit bei Abkühlung des Verbundmaterials unter 270°C. Es kann vermutet werden, dass die geringen Mengen an Cristobalit durch die Glaskeramikphasen stabilisiert werden. Gemäß einer Ausführungsform enthält das Verbundmaterial in oberflächennahen Bereichen bis zu einer Tiefe von 5 mm, vorzugsweise bis zu einer Tiefe von 10 mm bis zu 1 Vol.-%, vorzugsweise mehr als 0,05 Vol.-% Cristobalit.

Das Verbundmaterial ist porös. Insbesondere weist das Verbundmaterial eine Porosität im Bereich von 6 bis 12 Vol.-%, vorzugsweise im Bereich von 8 bis 10 Vol.-% auf. Das Verbundmaterial weist durch den Verbund von Glaskeramik und gesintertem Quarzglas eine besonders hohe Gesamtsteifigkeit auf. So liegt gemäß einer bevorzugten Ausführungsform das E-Modul bei Raumtemperatur im Bereich von 18 bis 33 GPa. Dieser Wert ergibt sich aus einem Biegezugversuch zur Bestimmung der Biegefestigkeit bei Raumtemperatur für feuerfest Erzeugnisse. Die hohe Steifigkeit ermöglicht eine gute Formstabilität. Auch bei einer Beladung der Formen und Unterlagen mit hohen Gewichten bleibt die Verformung unerheblich Zudem lässt sich durch das hohe E-Modul die Wanddicke von Platten oder Formkörpers bei einer gleichbleibend hohen Formstabilität reduzieren. Dies ist nicht nur in Hinblick auf den Materialverbrauch bei der Herstellung der Platten oder Formkörper wichtig. So führt beispielsweise beim Einsatz des Verbundmaterials als Brennhilfsmittel eine verringerte Wandstärke bzw. Dicke, also geringeres Volumen bei zumindest ähnlichen oder verbesserten Eigenschaften, dazu, dass beim Aufheizen weniger Energie benötigt wird. Somit kann eine geringere Wandstärke zu energie-effizienteren Prozessen, insbesondere bei den Hochtemperaturprozessen wie der Glas- oder Glaskeramikherstellung beitragen. Somit können dünnere Brennhilfsmittel, bspw. Auflageplatten, aus dem Verbundmaterial und somit eine höhere Belegungsdichte eines Ofens oder auch eine Verkürzung der Prozesszeiten ermöglicht werden.

Das Verbundmaterial ist somit insbesondere zur Verwendung als formstabiler Hochtemperaturkörper oder Brennhilfsmittel zur Keramisierung von Artikeln aus Grünglas geeignet. Ein entsprechendes Brennhilfsmittel kann dabei in Form einer Unterlegplatte oder Unterlegleiste vorliegen.

Gemäß einer Ausführungsform wird das Verbundmaterial als Unterlegplatte oder Unterlegleiste bei der Keramisierung von Grünglasartikeln verwendet. Es hat sich hierbei als besonders vorteilhaft herausgestellt, wenn die Glaskeramikphase im Verbundmaterial im Wesentlichen die gleiche Zusammensetzung aufweist wie das zu keramisierende Grünglas. Derartige Zusammensetzungen erweisen sich nicht nur bei der Keramisierung von Grünglas zu einer Glaskeramik sondern auch anderen Prozessen der thermischen Nachbehandlung, wie bspw. der Formgebung oder Dekoration, auch bereits keramisierter Grüngläser, also Glaskeramiken als vorteilhaft. Dabei ist es vorteilhaft, wenn das Brennhilfsmittel arteigene Bestandteile des thermisch zu behandelnden Materials umfasst.

Erfindungsgemäße, derartige Verbundmaterialien können als Brennhilfsmittel neben der bereits zuvor benannten Anwendung bei der Keramisierung von Grüngläsern zu Glaskeramiken als Unterlegplatte, auch bei deren Formgebung als Form und/oder Dekoration, auch im bereits keramisierten Zustand angewendet werden. Je nach Anwendungstemperatur bzw. Brandtemperatur sind solche Brennhilfsmittel auch in der Keramikindustrie einsetzbar, sowie auch in Prozessen zum Formgeben bzw. Umformen und/oder Verbinden von Gläsern mit Gläsern oder auch anderen Materialien, bspw. dem Glasfusing. Generell eignet sich das Verbundmaterial zum Einsatz in thermischen Prozessen bis zu Temperaturen von ca. 1200 °C. Das auf das Brennhilfsmittel aufgelegte keramisierte Grünglas bildet zusammen mit dem Brennhilfsmittel einen Verbund. Allgemein sieht diese Offenbarung dazu einen Verbund umfassend eine Unterlegplatte oder Unterlegleiste aus einem Verbundmaterial gemäß dieser Offenbarung und einem Grünglas- oder Glaskeramikartikel, bevorzugt einer Grünglas- oder Glaskeramikplatte vor, wobei zumindest Teilbereiche der Unterlegplatte oder Unterlegleiste und des Artikels eine gemeinsame Grenzfläche aufweisen und wobei sich die Zusammensetzungen der glaskeramischen Phase des Verbundmaterials der Unterlegplatte oder Unterlegleiste und des Glaskeramikartikels sich hinsichtlich des Gehaltes der einzelnen Bestandteile um maximal 10 Gew.-% unterscheiden, für Glas- oder Glaskeramikbestandteile mit einem Gehalt von weniger als 10 Gew.-% um höchstens den Faktor 2 unterscheiden und/oder die beiden Zusammensetzungen maximal 10 Gew.-% abweichende Bestandteile aufweisen, wobei bevorzugt das Verbundmaterial und der Glaskeramikartikel die gleiche Zusammensetzung aufweisen. Ein entsprechender Verbund wird auch mit dem Verbundmaterial und dem darauf aufgelegten, beispielsweise noch zu keramisierenden Grünglas gebildet.

Ein erfindungsgemäßes Verbundmaterial kann auch im Bereich Glasschmelze und/oder der zugehörigen Heißformgebung eingesetzt werden. Ferner ist auch ein Einsatz eines solchen Verbundmaterials in oder beim Metallschmelzen in ähnlicher Weise wie bzgl. Glasschmelzen und deren-Nachverarbeiten denkbar.

Neben der oben beschriebenen hohen Steifigkeit gegen eine elastische Verformung aufgrund einer hohen Beladung oder durch Eigengewicht ist die Widerstandsfähigkeit gegen eine plastische Verformung bei hoher Temperatur wichtig. Eine Ausführungsform sieht ein Brennhilfsmittel aus dem Verbundmaterial vor, wobei das Brennhilfsmittel als plane Unterlegplatte oder Unterlegleiste ausgebildet ist und die maximale Durchbiegung unter einer Biegebelastung von 0,5 N/mm$^2$ über eine Länge der Unterlegplatte orthogonal zur Druckrichtung von 200 mm bei gleichzeitiger Temperaturbelastung von 1130°C über 12 Stunden kleiner als 5 mm, bevorzugt kleiner als 3 mm und besonders bevorzugt kleiner als 2 mm ist.

### Detaillierte Beschreibung

Nachfolgend wird die Erfindung anhand der Figuren 1 bis 7 sowie anhand von Ausführungsbeispielen näher beschrieben. Es zeigen:

Fig. 1 und 2 eine schematische Darstellung des Verbundmaterials,

Fig. 3 eine schematische Darstellung eines Brennhilfsmittels in Form einer Unterlegleiste,

Fig. 4 eine schematische Darstellung eines Brennhilfsmittels in Form einer Unterlegplatte,

Fig. 5 den schematischen Aufbau eines Durchbiegeversuchs,

Fig. 6 und 7 fotographische Aufnahmen eines Ausführungsbeispiels und eines Vergleichsbeispiels nach Durchführung des Durchbiegeversuchs, und

Fig. 8 ein Diagramm zur Veranschaulichung der geringen Durchbiegung der erfindungsgemäßen Brennhilfsmittel nach. Belastung im Vergleich zu herkömmlichen Materialien auf Basis von reinem Quarzgut.

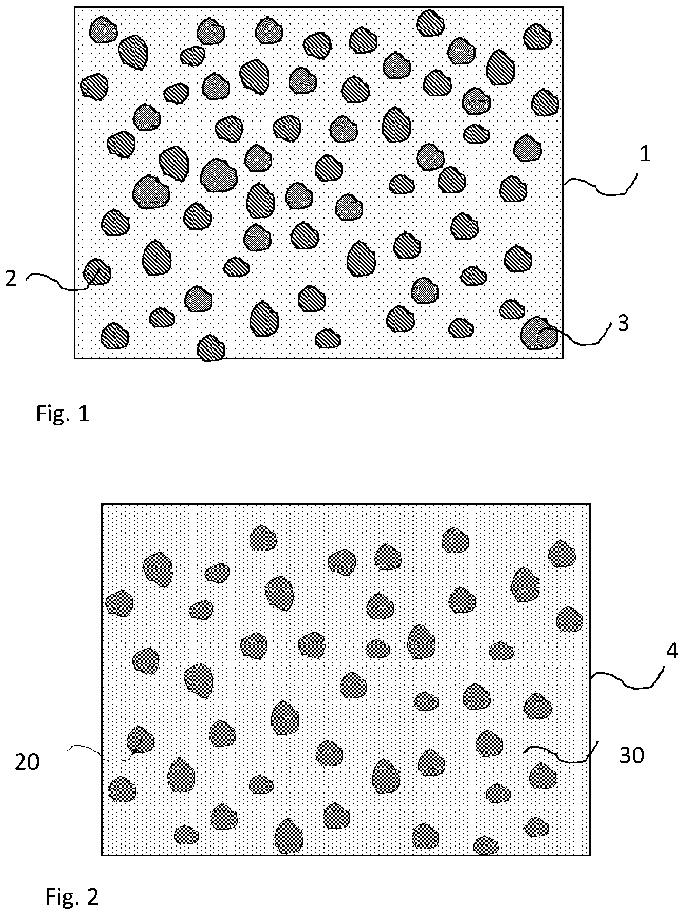

Fig. 1 zeigt die schematische Darstellung einer Zubereitung 1 gemäß einem ersten Ausführungsbeispiel. Die Zubereitung 1 umfasst einen Basisschlicker, Quarzglaspartikel und Partikel aus kristallisierbarem Multikomponentenglas. Der Basisschlicker umfasst Wasser als Dispergiermedium mit einem Gehalt zwischen 30 und 50 Gew.-%, bevorzugt 35 und 45 Gew.-%, meist bevorzugt 38 und 42 Gew.-%. und darin kolloidal verteilt SiO$_2$-Feinstpartikel mit einem Anteil zwischen 50 und 70 Gew.-%, bevorzugt 55 und 65 Gew.-%, meist bevorzugt 58 und 62 Gew.-%. Bei dem kristallisierbaren Glas 3 handelt es sich um ein Multikomponentenglas, vorzugsweise um ein kristallisierbares Glas, auch als Grünglas bezeichnet, aus Lithiumaluminiumsilikat (LAS-Typ). Die mittlere Partikelgröße D50 des kristallisierbaren Glases liegt in dem in Fig. 1 dargestellten Ausführungsbeispiel im Bereich von 20 bis 35 $\mu$m. Die Quarzglaspartikel weisen eine mittlere Partikelgröße D50 im Bereich von 63 $\mu$m bis 250 $\mu$m auf. Vorzugsweise werden die Partikelgrößenverteilungen von Grünglas und Quarzglas so gewählt, dass die Mischung durch eine Andreassen-Gleichung mit einem q-Wert kleiner als 0,3 definiert ist.

Das Grünglas 3 weist eine Keramisierungstemperatur unterhalb von 1200°C auf. Somit liegt die Keramisierungstemperatur des Grünglases 3 unterhalb der Sintertemperatur zur Sinterung der Quarzglaspartikel. Dies ermöglicht eine Keramisierung des Grünglases 3 während der Sinterung des Quarzglasanteils. Hierbei kann die glasige Phase der glaskeramischen Bereiche mit dem Quarzglas gemeinsam versintert werden, so dass zwischen der Sinterquarzgutmatrix und den darin dispergierten, glaskeramischen Phasen eine besonders stabile Anbindung erzielt werden kann. Hierbei wird die Zubereitung auf eine Temperatur erhitzt, die zumindest der Temperatur entspricht, bei welcher das aus Zubereitung 1 erhaltene Brennhilfsmittel eingesetzt werden soll. Bei dem in Fig. 1 gezeigten Ausführungsbeispiel wird zur Herstellung eines entsprechenden Brennhilfsmittel die Zubereitung 1 in eine Form mit porösen Wänden gegossen. Durch die porösen Wände kann der Wasseranteil der Zubereitung aufgenommen werden, so dass ein stabiler Grünkörper erhalten wird. Der Grünkörper wird zur Sinterung auf eine Temperatur erhitzt, die zumindest der Temperatur entspricht, bei der das so entstandene Brennhilfsmittel eingesetzt werden soll.

In Fig. 2 wird schematisch das durch Sinterung der in Fig. 1 gezeigten Zubereitung hergestellte Verbundmaterial 4 gezeigt. Durch die Sinterung wurden die Quarzglaspartikel 2 und der Schlicker in eine Quarzmatrix 30 umgewandelt. Die Grünglaspartikel 2 wurden in die Glaskeramikphasen 20 umgewandelt. Das Verbundmaterial 4 wird somit durch eine Sinterquarzgutmatrix 30 gebildet, in der Glaskeramikphasen 20 dispergiert sind. In dem in Fig. 2 dargestellten Beispiel weist das Verbundmaterial 4 einen Anteil an glaskeramischen Phasen 20 im Bereich von 5 bis 30 Vol.-% auf. Bei den glaskeramischen Phasen 20 handelt es sich um eine LAS-Glaskeramik. Die glaskeramischen Phasen 20 weisen einen Kristallisationsgrad von zumindest 30 Vol.-%, bevorzugt einen Kristallisationsgrad im Bereich von 60 bis 90 Vol.-% auf, wobei die kristallinen Phasen als Keatit vorliegen. Keatit ist hierbei auch bei hohen Temperaturen, d.h. bei Temperaturen oberhalb von 1180 °C, stabil. Hierdurch kann die Sinterquarzgutmatrix 30 bei hohen Temperaturen stabilisiert und eine Umwandlung der Sinterquarzgutmatrix in Cristobalit verhindert oder zumindest verringert werden. Vorzugsweise weist das Verbundmaterial einen Cristobalitanteil von weniger als 5 Vol.-% auf. Das Verbundmaterial 4 kann Poren aufweisen, die jedoch in Fig. 2 nicht dargestellt sind.

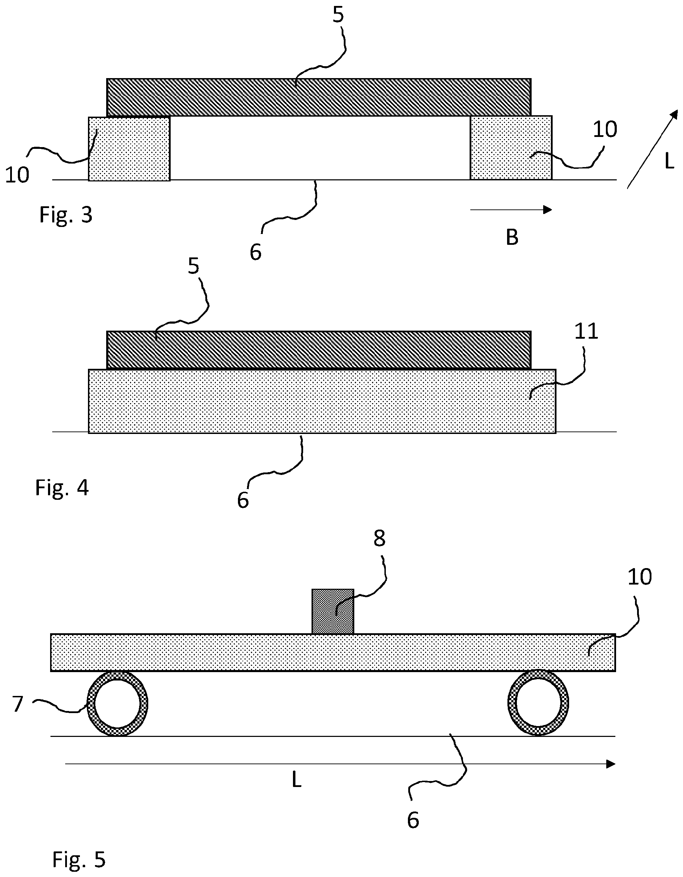

In den Fig. 3 und 4 wird die Verwendung des Verbundmaterials 4 als Brennhilfsmittel 10, 11 dargestellt. Das in Fig. 3 dargestellte Brennhilfsmittel 10 ist als Leiste mit einer Breite B und einer Länge L ausgebildet, wobei die Länge L größer als die Breite B ist. Die Brennhilfsmittel 10 werden auf dem Ofenboden 6 platziert und dienen als Auflage für die Grünglasplatte 5. Die Grünglasplatte 5 liegt hierbei nur in ihren Randbereichen auf den Leisten 10 auf. Fig. 4 zeigt eine Ausführungsform, bei der das Brennhilfsmittel 11 als Platte ausgebildet ist. Hier liegt die Grünglasplatte 5 vollflächig auf der Platte 11 auf. Vorteilhafterweise weist die Grünglasplatte 5 die gleiche Zusammensetzung auf wie die glaskeramischen Phasen des Brennhilfsmittels 10, 11. Die erfindungsgemäßen Brennhilfsmittel zeigen eine hohe Formtreue.

Fig. 5 zeigt den schematischen Aufbau zur Ermittlung der bleibenden Verformung durch eine thermo-mechanische Belastung des Brennhilfsmittels 10. Hierbei wird bspw. ein 200 mm langes Stück des Brennhilfsmittelmaterials 10 auf zwei feuerfesten Abstandhalter 7 gelagert, wobei lediglich die Randbereiche des Brennhilfsmittels 10 auf den Abstandhaltern 7 aufliegen. In der Mitte des Brennhilfsmittels 10 wird ein Gewicht 8 platziert, wodurch das Brennhilfsmittel 10 mit einer maximalen Biegespannung von 0,5 N/mm$^2$ belastet wird. Die in Fig. 5 gezeigte Anordnung wird für 5 Tage bei 1130°C gelagert. Anschließend wird die bleibende Durchbiegung des Brennhilfsmittels 10 ermittelt. Ebenso wurde die Durchbiegung von Brennhilfsmitteln mit den gleichen Abmessungen, jedoch aus reinem Sinterquarzgut, d.h. ohne glaskeramische Phasen, als Vergleichsbeispiele bestimmt.

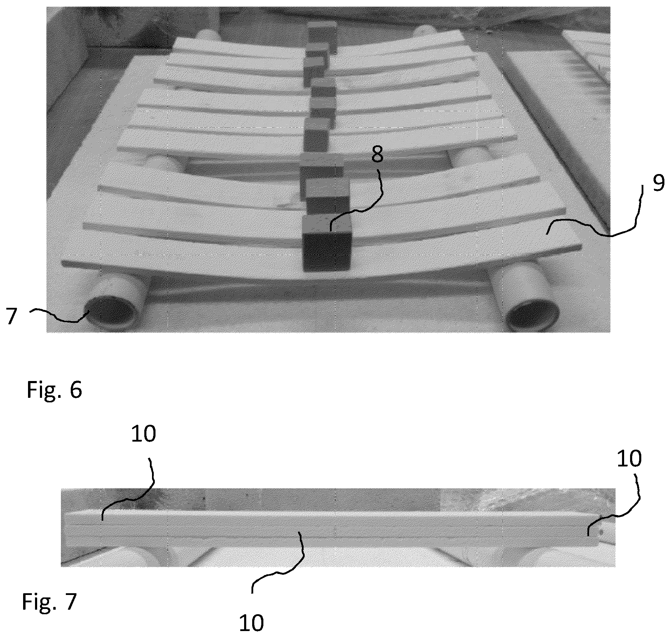

Fig. 6 zeigt eine fotographische Aufnahme im Wesentlichen reiner Sinterquarzgutleisten 9 nach dem oben beschriebenen Biegeversuch. Bereits mit bloßem Auge ist eine deutliche Durchbiegung der Quarzleisten erkennbar. Fig. 7 zeigt drei Leisten 10 aus dem erfindungsgemäßen Verbundmaterial, welche den gleichen Bedingungen wie die in Fig. 6 gezeigten Sinterquarzgutleisten unterzogen wurden. Keine der drei Leisten zeigt eine deutliche Formabweichung. Vielmehr weisen die Leisten 10 eine Durchbiegung von weniger als 2 mm pro 200 mm auf.

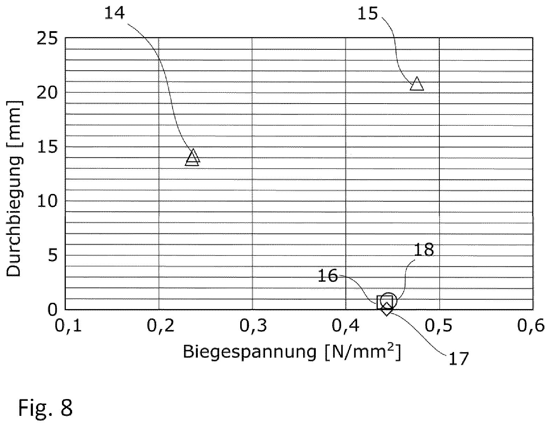

Fig. 8 zeigt die Durchbiegung in Abhängigkeit von der Biegespannung. Bei den Proben 14 bis 15 handelt es sich um Vergleichsbeispiele aus im Wesentlichen reinem Quarzgut, die Proben 16, 17, 18 sind Ausführungsbeispiele erfindungsgemäßer Brennhilfsmittel. Alle Proben wurden bei 1130°C für 12 Stunden mit einer Biegespannung von 0,5 N/mm$^2$ belastet. Die Probe 16 enthält dabei 10 Vol.-%, die Probe 17 enthält 15 Vol.-% und die Probe 18 enthält 20 Vol.-% glaskeramische Phasen.

Aus Fig. 8 wird deutlich, dass die Vergleichsbeispiele 14 und 15 erhebliche Durchbiegungen aufweisen. Hierbei steigt die Durchbiegung mit steigender Biegespannung. Es kann angenommen werden, dass es bei den Sinterquarzgutleisten zu einer langsamen Deformation der glasigen und damit viskosen Verbindungsstellen zwischen den einzelnen Kieselglaskörnern in den Leisten kommt. Durch die Kombination mit glaskeramischen Phasen wird hingegen an diesen Verbindungstellen bevorzugt eine kristalline Phase eingebaut. Da diese nicht viskos ist, zeigen die entsprechenden Leisten 16, 17, 18 keine Deformation bei der Temperaturbehandlung. In weiteren orientierenden Versuchen hat sich gezeigt, dass auch sehr geringe Anteile an glaskeramischen Phasen die Verformung bei thermo-mechanischer Beanspruchung gegenüber reinem Sinterquarzgut deutlich verringern.

Bezugszeichenliste

| | |
|---|---|
| 1 | Zubereitung |
| 2 | teilweise kristallisierte Glaspartikel aus Mehrkomponentenglas |
| 3 | Quarzglaspartikel |
| 4 | Verbundmaterial |
| 5 | Glaskeramikplatte |
| 6 | Ofenboden |
| 7 | Abstandhalter |
| 8 | Gewicht |
| 10 | leistenförmiges Brennhilfsmittel |
| 11 | plattenförmiges Brennhilfsmittel |
| 14, 15 | Sinterquarzgutleiste, reines $SiO_2$ ohne keramische Phasen |
| 16 | Sinterquarzgutleiste mit 10 Vol.-% zumindest teilweise kristallisierten Glaspartikeln aus Mehrkomponentenglas. |
| 17 | Sinterquarzgutleiste mit 15 Vol.-% zumindest teilweise kristallisierten Glaspartikeln aus Mehrkomponentenglas. |
| 18 | Sinterquarzgutleiste mit 20 Vol.-% zumindest teilweise kristallisierten Glaspartikeln aus Mehrkomponentenglas. |
| 20 | glaskeramische Phase |
| 30 | Sinterquarzgut- oder Sinterquarz-Matrix |

**Patentansprüche**

1. Zubereitung, insbesondere verwendbar zur Herstellung von Platten und Formkörpern, umfassend einen Basisschlicker, Quarzglaspartikel und Partikel aus kristallisierbarem oder zumindest teilweise kristallisiertem Multikomponentenglas, wobei der Anteil des Basisschlickers 15 bis 45 Gew.-% beträgt, der Basisschlicker Wasser als Dispergiermedium mit einem Gehalt zwischen 30 und 50 Gew.-% und darin kolloidal verteilte SiO2-Feinstpartikel mit einem Anteil zwischen 50 und 70 Gew.-% enthält, wobei die $SiO_2$-Feinstpartikel eine Korngrößenverteilung $D_{50}$ im Bereich von 1 bis 3 $\mu$m und/oder eine Korngrößenverteilung $D_{90}$ kleiner als 5 $\mu$m aufweisen und wobei der Anteil an Quarzglaspartikeln in der Zubereitung 40 bis 70 Gew.-% und der Anteil an kristallisierbarem oder zumindest teilweise kristallisiertem Mehrkomponentenglas 0,5 bis 37 Gew.-% beträgt.

2. Zubereitung gemäß dem vorstehenden Anspruch, wobei die Quarzglaspartikel eine Korngrößenverteilung D50 im Bereich von 30 $\mu$m bis 500 $\mu$m, bevorzugt im Bereich von 63$\mu$m bis 250 $\mu$m und/oder eine Korngrößenverteilung D99 kleiner als 3,0 mm, bevorzugt kleiner als 2,0 mm und besonders bevorzugt kleiner als 1,0 mm aufweisen.

3. Zubereitung gemäß einem der vorstehenden Ansprüche, wobei die Korngrößenverteilung der Partikel aus Quarzglas, Mehrkomponentenglas, und/oder Glaskeramikpartikeln multimodal, bevorzugt bimodal oder trimodal ist.

4. Zubereitung gemäß einem der vorstehenden Ansprüche, wobei die Größenverteilung der gesamten in der Zubereitung vorhandenen Partikel einer Andreassen-Gleichung

$$Q_3(d) = \left(\frac{d}{D}\right)^q$$

d Partikelgröße
D maximale Partikelgröße
q Verteilungskoeffizient

mit einem Verteilungskoeffizienten q < 0,3, bevorzugt < 0,25 entspricht.

5. Zubereitung gemäß einem der vorstehenden Ansprüche, **gekennzeichnet durch** zumindest eines der folgenden Merkmale:

- Glaspartikel können zumindest teilweise in eine Glaskeramik auf Silicatbasis, bevorzugt in eine MAS-Glaskeramik, in eine ZAS-Glaskeramik oder in eine LAS-Glaskeramik umgewandelt werden,
- die Glaskeramik- oder Grünglaspartikel weisen eine mittlere Korngröße D50 im Bereich von 10$\mu$m bis 100 $\mu$m auf,
- der Anteil an kristallisierbarem Mehrkomponentenglas und/oder Glaskeramik beträgt 0,5 bis 20 Gew.-%, vorzugsweise im Bereich von 0,5 bis 5 Gew.-%, oder 1 bis 20 Gew.-%, besonders bevorzugt 1 bis 10 Gew.-%,
- das kristallisierbare Mehrkomponentenglas weist eine Keramisierungstemperatur $T_{Keramisierung}$ von weniger als 1200°C, bevorzugt weniger als 1100 °C und besonders bevorzugt weniger als 950 °C auf.

6. Verbundmaterial hergestellt oder herstellbar mit der Zubereitung gemäß einem der Ansprüche 1 bis 5, umfassend eine gesinterte Quarzglas-Matrix und zumindest eine darin glaskeramische Phase und wobei der Anteil der glaskeramischen Phase am Verbundmaterial 0,5 bis 30- Vol.% beträgt.

7. Verbundmaterial gemäß dem vorstehenden Anspruch, wobei die einzelnen Glaskeramikpartikel eine Größe $D_{50}$ im Bereich von 10 $\mu$m bis 100 $\mu$m aufweisen.

8. Verbundmaterial gemäß einem der beiden vorstehenden Ansprüche, **gekennzeichnet durch** zumindest eines der folgenden Merkmale:

   - der Anteil der glaskeramischen Phase am Verbundmaterial beträgt 1 bis 20 Vol.-%, bevorzugt 1 bis 10 Vol.-%,
   - die glaskeramische Phase umfasst eine LAS-, eine MAS-, und/oder eine ZAS-Glaskeramik,
   - die Glaskeramik hat einen Kristallisationsgrad im Bereich von 20 % bis 90 %, bevorzugt von zumindest 30% und die kristalline Phase enthält bevorzugt Keatit.

9. Verbundmaterial gemäß einem der vorstehenden Ansprüche, **gekennzeichnet durch** zumindest eines der folgenden Merkmale:

   - das Verbundmaterial enthält in oberflächennahen Bereichen bis zu einer Tiefe von 5 mm, bevorzugt bis zu einer Tiefe von 10 mm bis zu 1 Vol.-%, bevorzugt > 0,05 Vol.-% Cristobalit,
   - das Verbundmaterial weist einen thermischen Ausdehnungskoeffizienten $\alpha$20-300°C im Bereich von 0,01*10-6 bis 1,0*10-6 /K, bevorzugt 0,02*10-6 bis 0,6* 10-6 /K auf,
   - das Verbundmaterial weist eine Porosität im Bereich von 6 bis 12 Vol.%, bevorzugt im Bereich von 8 bis 10 vol.% auf,
   - das Verbundmaterial weist bei einer Raumtemperatur ein E-Modul im Bereich von 18 bis zu 33 GPa auf.

10. Verbundmaterial, hergestellt oder herstellbar mit einem Verfahren umfassend zumindest die folgenden Schritte:

    a) Bereitstellung einer Zubereitung gemäß einem der Ansprüche 1 bis 5 als Gießmasse,
    b) Bereitstellung einer Gießform, bevorzugt einer Gießform mit porösen Wänden, besonders bevorzugt einer Gipsform,
    c) Gießen der in Schritt a) bereitgestellten Zubereitung in die in Schritt b) bereitgestellte Gießform, wobei die Wände das in der Zubereitung vorhandene Wasser absorbieren und ein formstabiler Grünkörper gebildet wird,
    d) Entnahme des Grünkörpers aus der Form,
    e) Aufheizen des in Schritt c) erzeugten Grünkörpers auf Temperaturen $T_{Sinter}$ im Bereich von 1000 bis 1200°C, wobei die $SiO_2$-Partikel zusammen mit dem Grünglaspartikeln gesintert werden und wobei die Partikel des kristallisierbaren Mehrkomponentenglases bei einer Temperatur $T_{Keramisierung}$ zumindest teilweise in eine Glaskeramikphase umgewandelt werden und wobei gilt $T_{Keramisierung} < T_{sinter}$.

11. Verwendung eines Verbundmaterials gemäß einem der vorstehenden Ansprüche als Unterlegplatte, insbesondere als formstabile Hochtemperaturkörper oder Brennhilfsmittel zur Keramisierung von Artikeln aus Grünglas oder Nachbehandlung von Artikeln aus Glaskeramik.

12. Brennhilfsmittel, insbesondere in Form einer Unterlegplatte oder Unterlegleiste aus einem Verbundmaterial gemäß einem der vorstehenden Ansprüche 6 bis 10.

13. Brennhilfsmittel gemäß dem vorstehenden Anspruch, wobei das Brennhilfsmittel als plane Unterlegplatte ausgebildet ist und nach einer Temperaturbelastung bei 1130 °C über die Dauer von 12 h bei einer Biegespannung von 0,5 N/mm$^2$ über eine Länge der Unterlegplatte von 200 mm orthogonal zur Druckrichtung eine maximale bleibende Durchbiegung kleiner als 5 mm, bevorzugt kleiner als 3 mm und besonders bevorzugt kleiner als 1 mm aufweist.

14. Verbund umfassend eine Unterlegplatte oder Unterlegleiste aus einem Verbundmaterial gemäß einem der vorstehenden Ansprüche 6 bis 10 und einem Grünglas oder einem Glaskeramikartikel, bevorzugt einer Grünglas- oder Glaskeramikplatte, wobei zumindest Teilbereiche der Unterlegplatte oder Unterlegleiste und des Glaskeramikartikels eine gemeinsame Grenzfläche aufweisen und wobei sich die Zusammensetzungen der glaskeramischen Phase des Verbundmaterials der Unterlegplatte oder Unterlegleiste und des Glaskeramikartikels sich hinsichtlich des Gehaltes der einzelnen Bestandteile um maximal 10 Gew.-% unterscheiden, für Glas- oder Glaskeramikbestandteile mit einem Gehalt von weniger als 10 Gew.-% um höchstens den Faktor 2 unterscheiden und/oder die beiden Zusammensetzungen maximal 10 Gew.-% abweichende Bestandteile aufweisen, wobei bevorzugt das Verbundmaterial und der Glaskeramikartikel die gleiche Zusammensetzung aufweisen.

## Claims

1. Formulation, usable in particular for production of sheets and shaped bodies, comprising a base slurry, quartz glass particles and particles of crystallizable or at least partly crystallized multicomponent glass, where the proportion of the base slurry is 15% to 45% by weight, the base slurry contains water as dispersion medium with a content between 30% and 50% by weight and ultrafine SiO2 particles colloidally distributed therein with a proportion between 50% and 70% by weight, where the ultrafine $SiO_2$ particles have a particle size distribution $D_{50}$ in the range from 1 to 3 $\mu$m and/or a particle size distribution $D_{90}$ of less than 5 $\mu$m, and where the proportion of quartz glass particles in the formulation is 40% to 70% by weight and the proportion of crystallizable or at least partly crystallized multicomponent glass is 0.5% to 37% by weight.

2. Formulation according to the preceding claim, wherein the quartz glass particles have a particle size distribution D50 in the range from 30 $\mu$m to 500 $\mu$m, preferably in the range from 63 $\mu$m to 250 $\mu$m, and/or a particle size distribution D99 of less than 3.0 mm, preferably less than 2.0 mm and more preferably less than 1.0 mm.

3. Formulation according to either of the preceding claims, wherein the particle size distribution of the particles of quartz glass, multicomponent glass and/or glass-ceramic particles is multimodal, preferably bimodal or trimodal.

4. Formulation according to any of the preceding claims, wherein the size distribution of all the particles present in the formulation conforms to an Andreassen equation

$$Q_3(d) = \left(\frac{d}{D}\right)^q$$

    d particle size
    D maximum particle size
    Q distribution coefficient

with a distribution coefficient q < 0.3, preferably < 0.25.

5. Formulation according to any of the preceding claims, **characterized by** at least one of the following features:

    - glass particles can be converted at least partly to a silicate-based glass-ceramic, preferably to an MAS glass-ceramic, to a ZAS glass-ceramic or to an LAS glass-ceramic,
    - the glass-ceramic or green glass particles have a median particle size D50 in the range from 10 $\mu$m to 100 $\mu$m,
    - the proportion of crystallizable multicomponent glass and/or glass-ceramic is 0.5% to 20% by weight, preferably in the range from 0.5% to 5% by weight, or 1% to 20% by weight, more preferably 1% to 10% by weight,
    - the crystallizable multicomponent glass has a ceramization temperature $T_{ceramization}$ of less than 1200°C, preferably less than 1100°C and more preferably less than 950°C.

6. Composite material, produced or producible with the formulation according to any of Claims 1 to 5, comprising a sintered quartz glass matrix and at least one phase which is glass-ceramic therein, and where the proportion of the glass-ceramic phase in the composite material is 0.5% to 30% by volume.

7. Composite material according to the preceding claim, wherein the individual glass-ceramic particles have a size $D_{50}$ in the range from 10 $\mu$m to 100 $\mu$m.

8. Composite material according to one of the two preceding claims, **characterized by** at least one of the following features:

    - the proportion of the glass-ceramic phase in the composite material is 1% to 20% by volume, preferably 1% to 10% by volume,
    - the glass-ceramic phase comprises an LAS, MAS and/or ZAS glass-ceramic,
    - the glass-ceramic has a crystallization level in the range from 20% to 90%, preferably of at least 30%, and the crystalline phase preferably contains keatite.

9. Composite material according to any of the preceding claims, **characterized by** at least one of the following features:

    - the composite material in near-surface regions down to a depth of 5 mm, preferably down to a depth of 10 mm, contains up to 1% by volume, preferably > 0.05% by volume, of cristobalite,
    - the composite material has a coefficient of thermal expansion $\alpha$20-300°C in the range from 0.01*10-6 to 1.0*10-6/K, preferably 0.02*10-6 to 0.6*10-6/K,
    - the composite material has a porosity in the range from 6% to 12% by volume, preferably in the range from 8% to 10% by volume,
    - the composite material has a modulus of elasticity at room temperature in the range from 18 up to 33 GPa.

10. Composite material, produced or producible by a method comprising at least the following steps:

a) providing a formulation according to any of Claims 1 to 5 as casting compound,
b) providing a casting mould, preferably a casting mould with porous walls, more preferably a gypsum mould,
c) pouring the formulation provided in step a) into the casting mould provided in step b), where the walls absorb the water present in the formulation and a dimensionally stable green body is formed,
d) removing the green body from the mould,
e) heating up the green body produced in step c) to temperatures $T_{sinter}$ in the range from 1000 to 1200°C, where the $SiO_2$ particles are sintered together with the green glass particles, and where the particles of the crystallizable multicomponent glass are at least partly converted to a glass-ceramic phase at a temperature $T_{ceramization}$, and where $T_{ceramization} < T_{sinter}$.

11. Use of a composite material according to any of the preceding claims as base sheet, especially as dimensionally stable high-temperature body or firing aid for ceramization of articles made of green glass or aftertreatment of articles made of glass-ceramic.

12. Firing aid, especially in the form of a base sheet or base strip made of a composite material according to any of preceding Claims 6 to 10.

13. Firing aid according to the preceding claim, wherein the firing aid takes the form of a planar base sheet and, after thermal stress at 1130°C over a period of 12 h, at a flexural stress of 0.5 N/mm² over a length of the base sheet of 200 mm, orthogonally to the direction of pressure, has a maximum remaining deformation of less than 5 mm, preferably less than 3 mm and more preferably less than 1 mm.

14. Composite comprising a base sheet or base strip made of a composite material according to any of preceding Claims 6 to 10 and a green glass or a glass-ceramic article, preferably a green glass or glass-ceramic sheet, wherein at least some regions of the base sheet or base strip and of the glass-ceramic article have a common interface, and wherein the compositions of the glass-ceramic phase of the composite material of the base sheet or base strip and of the glass-ceramic article differ by a maximum of 10% by weight with regard to the content of the individual constituents, differ at most by a factor of 2 for glass or glass-ceramic constituents having a content of less than 10% by weight, and/or the two compositions have constituents that differ by a maximum of 10% by weight, where the composite material and the glass-ceramic article preferably have the same composition.

**Revendications**

1. Préparation, en particulier utilisable pour la fabrication de plaques et de corps moulés, comprenant une pâte de base, des particules de verre de quartz et des particules de verre multicomposant cristallisable ou au moins partiellement cristallisé, la proportion de la pâte de base étant comprise entre 15% et 45% en poids, la pâte de base contenant de l'eau comme agent dispersant avec une teneur comprise entre 30% et 50% en poids, et des particules fines de $SiO_2$ réparties de manière colloïdale dans celle-ci avec une proportion comprise entre 50% et 70% en poids, les particules fines de $SiO_2$ présentant une distribution granulométrique $D_{50}$ comprise entre 1μm et 3μm et/ou une distribution granulométrique $D_{90}$ inférieure à 5μm, et la proportion de particules de verre de quartz dans la préparation étant comprise entre 40% et 70% en poids, et la proportion de verre à plusieurs composants cristallisable ou au moins partiellement cristallisé étant comprise entre 0,5% et 37% en poids.

2. Préparation selon la revendication précédente, dans laquelle les particules de verre de quartz ont une distribution granulométrique D50 comprise entre 30μm et 500μm, de préférence comprise entre 63μm et 250um et/ou une distribution granulométrique D99 inférieure à 3,0mm, de préférence inférieure à 2,0mm, et de manière particulièrement préférée, inférieure à 1,0mm.

3. Préparation selon l'une des revendications précédentes, dans laquelle la distribution granulométrique des particules de verre de quartz, de verre à plusieurs composants et/ou de particules de vitrocéramique est multimodale, de préférence bimodale ou trimodale.

4. Préparation selon l'une des revendications précédentes, dans laquelle la distribution granulométrique de l'ensemble des particules présentes dans la préparation correspond à une équation de Andreassen

$$Q_3(d) = \left(\frac{d}{D}\right)^q$$

d taille des particules
D taille maximale des particules
q coefficient de distribution

avec un coefficient de distribution q < 0,3, de préférence < 0,25.

5. Préparation selon l'une des revendications précédentes, **caractérisée par** au moins l'une des caractéristiques suivantes :

  - les particules de verre sont aptes à être transformées au moins en partie en une vitrocéramique à base de silicate, de préférence en une vitrocéramique MAS, en une vitrocéramique ZAS ou en une vitrocéramique LAS,
  - les particules de vitrocéramique ou de verre crû ont une granulométrie moyenne D50 comprise entre 10$\mu$m et 100$\mu$m,
  - la proportion de verre multicomposant cristallisable et/ou de vitrocéramique est comprise entre 0,5% et 20% en poids, de préférence comprise entre 0,5% et 5% en poids, ou entre 1% et 20% en poids, de manière particulièrement préférée, entre 1% et 10% en poids,
  - le verre cristallisable multicomposant présente une température de céramisation $T_{Keramisierung}$ inférieure à 1200°C, de préférence inférieure à 1100°C, et de manière particulièrement préférée, inférieure à 950°C.

6. Matériau composite fabriqué ou apte à être fabriqué avec la préparation selon l'une des revendications 1 à 5, comprenant une matrice en verre de quartz fritté et au moins une phase vitrocéramique dans celle-ci, et dans lequel la proportion de la phase vitrocéramique dans le matériau composite est comprise entre 0,5% et 30% en volume.

7. Matériau composite selon la revendication précédente, dans lequel les particules vitrocéramiques individuelles ont une taille $D_{50}$ comprise entre 10$\mu$m et 100$\mu$m.

8. Matériau composite selon l'une des deux revendications précédentes, **caractérisé par** au moins l'une des caractéristiques suivantes :

  - la proportion de la phase vitrocéramique dans le matériau composite est comprise entre 1% et 20% en volume, de préférence entre 1% et 10% en volume,
  - la phase vitrocéramique comprend une vitrocéramique LAS, MAS et/ou ZAS,
  - la vitrocéramique a un degré de cristallisation compris entre 20% et 90%, de préférence d'au moins 30%, et la phase cristalline contient de préférence de la kératite.

9. Matériau composite selon l'une des revendications précédentes, **caractérisé par** au moins l'une des caractéristiques suivantes :

  - le matériau composite contient jusqu'à 1% en volume, de préférence > 0,05% en volume, de cristobalite dans les zones proches de la surface, jusqu'à une profondeur de 5mm, de préférence jusqu'à une profondeur de 10mm,
  - le matériau composite présente un coefficient de dilatation thermique $\alpha$ de 20°C à 300°C compris entre 0,01*10-6 et 1,0*10-6 /K, de préférence entre 0,02*10-6 et 0,6*10-6 /K,
  - le matériau composite présente une porosité comprise entre 6% et 12% en volume, de préférence entre 8% et 10% en volume,
  - le matériau composite présente, à température ambiante, un module d'élasticité compris entre 18GPa et 33GPa.

10. Matériau composite fabriqué ou aptes à être fabriqué selon un procédé comprenant au moins les étapes suivantes :

  a) mise à disposition d'une préparation selon l'une des revendications 1 à 5 sous forme de masse à mouler,
  b) mise à disposition d'un moule, de préférence d'un moule à parois poreuses, de préférence d'un moule en plâtre,
  c) coulée de la préparation mise à disposition à l'étape a) dans le moule de coulée mis à disposition à l'étape b), les parois absorbant l'eau présente dans la préparation et un corps crû indéformable se formant,
  d) démoulage du corps crû du moule,
  e) chauffage du corps crû produit à l'étape c) à des températures $T_{sinter}$ comprises entre 1000 et 1200°C, les particules de $SiO_2$ étant frittées avec les particules de verre crû et les particules du verre multicomposant cristallisable étant transformées au moins partiellement en une phase vitrocéramique à une température $T_{Keramisierung}$, et $T_{Keramisierung} < T_{sinter}$.

11. Utilisation d'un matériau composite selon l'une des revendications précédentes en tant que plaque de support, en particulier en tant que corps indéformable à haute température ou en tant qu'auxiliaire de cuisson pour la céramisation d'articles en verre crû ou le post-traitement d'articles en vitrocéramique.

12. Accessoire de cuisson, en particulier sous la forme d'une plaque de support ou d'une baguette de support en un matériau composite selon l'une des revendications 6 à 10 ci-dessus.

13. Accessoire de cuisson selon la revendication précédente, l'accessoire de cuisson étant réalisé sous forme de plaque de support plane et présentant, après une sollicitation thermique à 1130°C pendant 12 heures avec une contrainte de flexion de 0,5N/mm$^2$ sur une longueur de la plaque d'appui de 200mm orthogonale à la direction de la pression, une déformation permanente maximale inférieure à 5mm, de préférence inférieure à 3mm et, de manière particulièrement préférée, inférieure à 1mm.

14. Composite comprenant une plaque de support ou une baguette de support en un matériau composite selon l'une des revendications 6 à 10 ci-dessus et un verre crû ou un article en vitrocéramique, de préférence une plaque en verre crû ou en vitrocéramique, au moins des parties de la plaque de support ou de la baguette de support et de l'article en vitrocéramique présentant une interface commune et les compositions de la phase vitrocéramique du matériau composite de la plaque de support ou de la baguette de support et de l'article en vitrocéramique ne différant pas de plus de 10% en poids en ce qui concerne la teneur des différents composants, pour les composants en verre ou en vitrocéramique contenant moins de 10% en poids, ne diffèrent pas d'un facteur 2 au maximum, et/ou les deux compositions présentant des composants qui diffèrent de 10% en poids au maximum, le matériau composite et l'article en vitrocéramique présentant de préférence la même composition.

Fig. 1

Fig. 2

Fig. 3

Fig. 4

Fig. 5

Fig. 6

Fig. 7

Fig. 8

**EP 4 345 074 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10359491 A1